# EUROPEAN PATENT SPECIFICATION

(11) **EP 4 008 115 B1**
(45) Date of publication and mention of the grant of the patent: **13.11.2024**
(21) Application number: 19940343.7
(22) Date of filing: 02.08.2019
(51) Int. Cl.: H04W 4/20

(54) **MULTIPLE SCRAMBLING IDENTITIES CONFIGURATION**
KONFIGURATION VON MEHREREN VERSCHLÜSSELUNGSIDENTITÄTEN
CONFIGURATION DE MULTIPLES IDENTITÉS D'EMBROUILLAGE

(43) Date of publication of application: 08.06.2022
(73) Proprietor: Lenovo (Beijing) Limited, Beijing 100085 (CN)
(72) Inventor: LIU, Bingchao, Beijing 102200 (CN); ZHU, Chenxi, Beijing 100085 (CN); WU, Lianhai, Beijing 100028 (CN); XIAO, Lingling, Beijing 100086 (CN)
(74) Representative: Openshaw & Co.
(86) International application number: PCT/CN2019/099011
(87) International publication number: WO 2021/022400

(56) References cited:
- US-A1- 2018 270 799
- OPPO: "Enhancements on multi-TRP and multi-panel transmission", vol. RAN WG1, no. Reno, USA; 20190513 - 20190517, 13 May 2019 (2019-05-13), XP051727739, Retrieved from the Internet <URL:http://www.3gpp.org/ftp/Meetings%5F3GPP%5FSYNC/RAN1/Docs/R1%2D1906287%2Ezip> [retrieved on 20190513]
- QUALCOMM INCORPORATED: "Maintenance for physical downlink control channel", vol. RAN WG1, no. Spokane, Washington, USA; 20181112 - 20181016, 11 November 2018 (2018-11-11), XP051555437, Retrieved from the Internet <URL:http://www.3gpp.org/ftp/Meetings%5F3GPP%5FSYNC/RAN1/Docs/R1%2D1813399%2Ezip> [retrieved on 20181111]
- HUAWEI, HISILICON: "Remaining details for DL design on multi-TRP/panel transmission for eMBB", 3GPP DRAFT; R1-1906040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051727497
- HUAWEI : "Summary of Offline Discussion for M-TRP based MIMO Enhancement", 3GPP DRAFT; R1-1907837 SUMMARY OF OFFLINE DISCUSSION FOR M-TRP_V2,, vol. RAN WG1, 17 May 2019 (2019-05-17), pages 1 - 3, XP051740110
- OPPO: "Enhancements on multi-TRP and multi-panel transmission", 3GPP DRAFT; R1-1906287, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051727739
- LG ELECTRONICS: "Enhancements on multi-TRP/panel transmission", 3GPP DRAFT; R1-1906730_MTRP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728181
- PANASONIC: "On multi-TRP enhancements for NR MIMO in Rel. 16", 3GPP DRAFT; R1-1907031_PANASONIC_NR_MIMO_MULTI_TRP_ENHANCEMENTS_VFINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728479

## Description

### FIELD

The subject matter disclosed herein generally relates to wireless communications, and more particularly relates to configuring multiple scrambling IDs.

### BACKGROUND

The following abbreviations are herewith defined, at least some of which are referred to within the following description: Third Generation Partnership Project (3GPP), European Telecommunications Standards Institute (ETSI), Frequency Division Duplex (FDD), Frequency Division Multiple Access (FDMA), Long Term Evolution (LTE), New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), Personal Digital Assistant (PDA), User Equipment (UE), Uplink (UL), Evolved Node B (eNB), Next Generation Node B (gNB), New Radio (NR), Downlink (DL), Central Processing Unit (CPU), Graphics Processing Unit (GPU), Field Programmable Gate Array (FPGA), Dynamic RAM (DRAM), Synchronous Dynamic RAM (SDRAM), Static RAM (SRAM), Liquid Crystal Display (LCD), Light Emitting Diode (LED), Organic LED (OLED), Next Generation Node B (gNB), Orthogonal Frequency Division Multiplexing (OFDM), Radio Resource Control (RRC), Reference Signal (RS), Time-Division Duplex (TDD), Time Division Multiplex (TDM), User Entity/Equipment (Mobile Terminal) (UE), Uplink (UL), Universal Mobile Telecommunications System (UMTS), Internet-of-Things (IoT), Narrowband Internet-of-Things (NB-IoT or NBIoT), Long Term Evolution (LTE), Narrowband (NB), Physical Downlink Shared Channel (PDSCH), Physical Uplink Shared Channel (PUSCH), Downlink control information (DCI), Resource Block (RB), Physical Resource Block (PRB), Universal Mobile Telecommunications System (UMTS), Evolved-UMTS Terrestrial Radio Access (E-UTRA or EUTRA), Transmission Reception Point (TRP), Control Resource Set (CORESET), Hybrid Automatic Repeat reQuest (HARQ).

In Release 15, a UE can only communicate with one TRP. The UE is configured with a PDSCH scrambling ID used for PDSCH scrambling for interference randomization. When the UE receives PDSCH(s) scrambled by a sequence initialized with the PDSCH scrambling ID, the UE descrambles the received PDSCH(s) with the same sequence initialized with the PDSCH scrambling ID. In Release 16, different TRPs can simultaneously transmit multiple DCIs to schedule multiple PDSCHs transmitted in one slot. In order to random the inter-TRP interference, it has been agreed that the gNB could configure multiple scrambling IDs to generate different PDSCH scrambling sequences for one UE.

It is therefore an object of the present invention to provide methods and apparatuses to implement the configuration and the association between TRPs and scrambling IDs for DL transmissions from multiple TRPs

XP051727739 and XP051555437 discuss designs for multiple-PDCCH and single-PDCCH based M-TRP/panel transmission as well as enhancement for URLLC.

### BRIEF SUMMARY

The invention is defined by the subject matter of the independent claims. Advantageous enhancements are subject to the dependent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates an example of configuring multiple scrambling IDs according to a first embodiment;
Figure 2 illustrates an example of configuring multiple scrambling IDs according to a second embodiment;
Figure 3 is a schematic flow chart diagram illustrating an embodiment of a method for configuring multiple scrambling IDs;
Figure 4 is a schematic flow chart diagram illustrating a further embodiment of a method for configuring multiple scrambling IDs; and
Figure 5 is a schematic block diagram illustrating apparatuses according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

In Release 15, a UE can only communicate with one TRP. PDSCHs scheduled by DCI(s) transmitted on the time-frequency resources identified by the CORESETs for the one TRP may be scrambled by the sequence initialized by the same scrambling ID. That is, only one scrambling ID is configured for one UE.

It has been agreed that a UE may be configured to have 5 CORESETs per BWP. In addition, a UE may communicate with multiple TRPs, and each TRP may independently transmit DCI(s) to the UE to schedule PDSCHs transmitted from said TRP.

On the other hand, the gNB may configure multiple scrambling IDs for PDSCHs transmitted from different TRPs to whiten the interference between the simultaneously received PDSCHs.

It is desirable to configure the PDSCHs transmitted from different TRPs to be scrambled according to different scrambling IDs. For example, the PDSCHs transmitted from a specific TRP are scrambled according to a scrambling ID associated with the specific TRP.

However, TRP ID may not be explicitly configured. Therefore, it may not be possible to configure a scrambling ID to be directly associated with a TRP based on the TRP ID.

CORESET contains one or more RBs in frequency domain and one or more symbols in the time domain. The time-frequency resources identified by the CORESET may be used to transmit a DCI. The CORESETs may be configured by higher layer signaling to be associated with different TRPs using the additional indices configured for each CORESET. That is, CORESETs for one specific TRP may be configured with the same index value by higher layers from gNB. The index values configured for the CORESETs are traditionally used for the purpose of separating HARQ feedback for different TRPs. Therefore, the CORESETs configured with the same index value are considered as being associated with the same TRP.

According to a first embodiment, the indices of CORESETs may also be used for associating scrambling IDs to CORESETs. That is, the CORESETs with the same index value will be associated with the same scrambling ID. In this manner, each TRP can be associated with a corresponding scrambling ID.

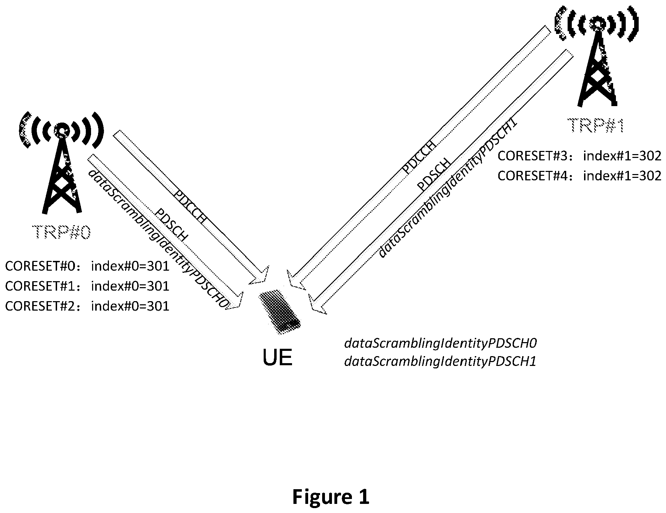

Figure 1 illustrates an example of configuring scrambling IDs according to the first embodiment.

As shown in Figure 1, five CORESETs with IDs #0, #1, #2, #3 and #4 are configured for a UE in a BWP (bandwidth part), where index#0 = 301 is configured for CORESETs #0, #1 and #2 for TRP #0 and index#1 = 302 is configured for CORESERs #3 and #4 for TRP #1. The same number (as the number of TRPs) of scrambling IDs may be configured.

In Figure 1, only two TRPs (TRP #0 and TRP #1) are shown. Alternatively, three or more TRPs may be configured, in which each TRP is associated with one or more CORESETs.

For two TRPs illustrated in Figure 1, two PDSCH scrambling IDs are configured by higher layer signaling as follows:

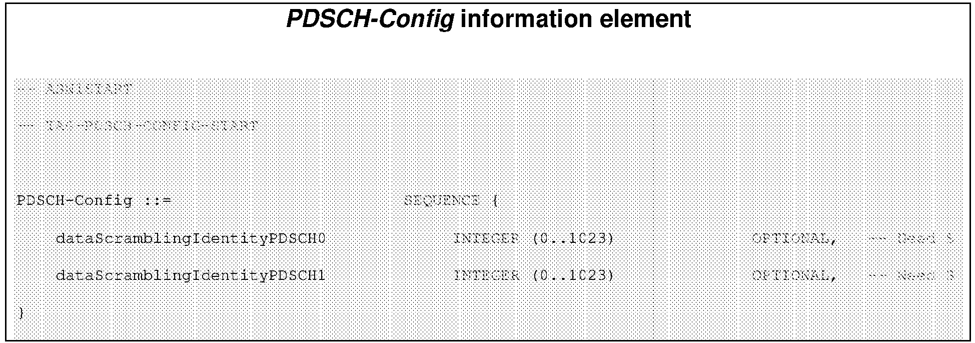

According to the first embodiment, the two PDSCH scrambling IDs are associated with the CORESETs according to the two index values, respectively. For example, the first PDSCH scrambling ID, i.e. *dataScramblingIdentityPDSCH0,* may be associated with the CORESETs with a lower index value (i.e. CORESETs #0, #1 and #2 that have the index #0. The second PDSCH scrambling ID, i.e. *dataScramblingIdentityPDSCH1,* may be associated with the CORESETs with a larger index value (i.e. CORESETs #3 and #4 that have the index #1).

Accordingly, PDSCHs scheduled by DCIs transmitted from CORESETs #0, #1 and #2 will be scrambled by the sequence initialized by *dataScramblingIdentityPDSCH0* while PDSCHs scheduled by DCIs transmitted from CORESETs #3 and #4 will be scrambled by the sequence initialized by *dataScramblingIdentityPDSCH1.*

As DCIs transmitted from CORESETs #0, #1 and #2 schedule the PDSCHs transmitted from TRP #0, all of PDSCHs transmitted from TRP #0 would be scrambled by the sequence initialized by *dataScramblingIdentityPDSCH0.*

Similarly, as DCIs transmitted from CORESETs #3 and #4 schedule the PDSCHs transmitted from TRP #1, all of PDSCHs transmitted from TRP #1 would be scrambled by the sequence initialized by *dataScramblingIdentityPDSCH1.*

The scrambled PDSCHs are transmitted to the UE. The UE descrambles the received PDSCHs with the same sequence for scrambling the PDSCHs. In particular, the PDSCHs received from TRP #0 (that are scheduled by DCIs transmitted from CORESETS having the index #0) are descrambled with the sequence initialized by *dataScramblingldentityPDSCHO* (which is associated with index #0). The PDSCHs received from TRP #1 (that are scheduled by DCIs transmitted from CORESETS having the index #1) are descrambled with the sequence initialized by *dataScramblingIdentityPDSCH1* (which is associated with index #1).

In the first embodiment, multiple index values are configured for the CORESETs. Therefore, the PDSCHs scheduled by DCIs transmitted from different CORESETs may be scrambled respectively by sequences initialized by different scrambling IDs associated with the multiple indices. As the CORESETs from a specific TRP may have the same index, the PDSCHs transmitted from the specific TRP will be scrambled by a sequence initialized by the same scrambling ID corresponding to the specific TRP.

However, instead of CORESETs from different TRPs having different index values, all the configured CORESETs may have the same index value. That is, CORESETs from different TRPs may be configured with the same index value. Furthermore, no index may be configured to CORESETs at all. In this condition, the scrambling ID can NOT be associated with the index values of the CORESETs.

According to a second embodiment, a CORESET group may be introduced to be associated with the scrambling ID.

The CORESET group may be configured by higher layer signaling. Each CORESET group includes one or more CORESETs. Each CORESET group may be associated with a different scrambling ID. The PDSCHs scheduled by DCIs transmitted from CORESETs contained in a CORESET group may be scrambled by a sequence initialized by a scrambling ID associated with the CORESET group.

In particular, the CORESETs contained in one CORESET group may be associated with one TRP. That is, each CORESET group is associated with one TRP.

Each CORESET group may be associated with one scrambling ID. Therefore, each scrambling ID can be associated with one TRP.

Two or more scrambling IDs may be configured to be associated with the same number of CORESET groups.

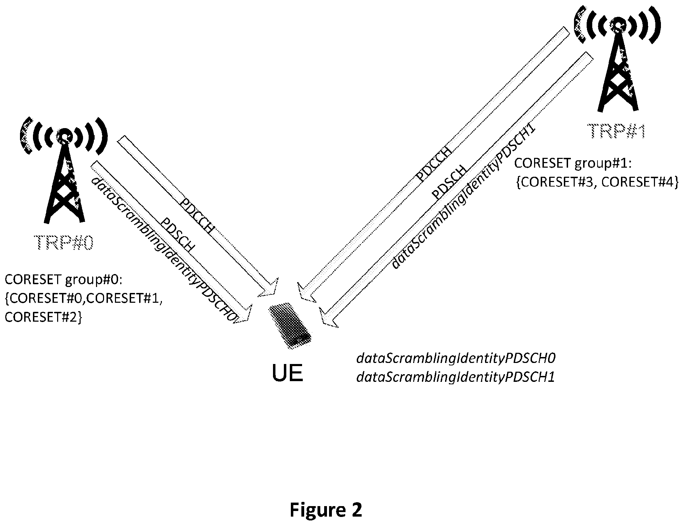

Figure 2 illustrates an example of configuring scrambling IDs according to the second embodiment.

As shown in Figure 2, two CORESET groups are configured for one UE. The CORESET group#0 includes CORESETS #0, #1 and #2 for TRP #0. The CORESET group#1 includes CORESETS #3 and #4 for TRP #1.

Two scrambling IDs, i.e. *dataScramblingIdentityPDSCH0* and *dataScramblingIdentityPDSCH1,* may be configured by higher layer signaling. The two scrambling IDs are associated with the two CORESET groups. For example, *dataScramblingldentityPDSCHO* may be associated with CORESET group #0 and *dataScramblingIdentityPDSCH1* will be associated with CORESET group #1.

The associated *dataScramblingIdentityPDSCH* can also be directly configured in the configuration of the CORESET group. That is, when two CORESET groups are configured for the UE, their associated *dataScramblingIdentityPDSCH* may be configured at the same time.

PDSCHs scheduled by DCIs transmitted from CORESETs contained in the CORESET group #0 may be scrambled by the sequence initialized by *dataScramblingldentityPDSCHO* and PDSCHs scheduled by DCIs transmitted from CORESETs contained in the CORESET group #1 may be scrambled by the sequence initialized by *dataScramblingIdentityPDSCH1.*

The CORESET group can be defined by using the following higher layer signaling:

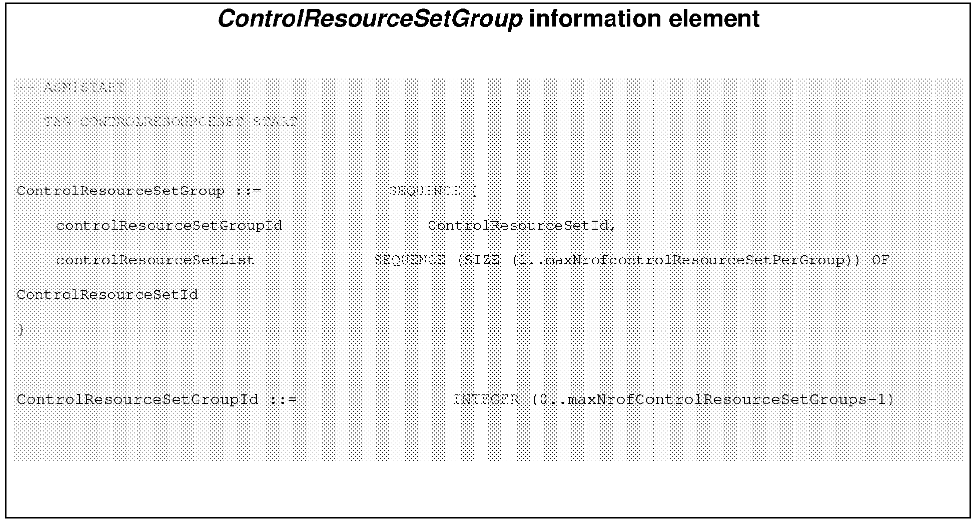

| ***ControlResourceSetGroup* field descriptions** |
|---|
| ***controlResourceSetList*** |
| This list contains a list of controlResourceSet IDs belongs to the corresponding group. |
| ***maxNrofcontrolResourceSetPerGroup*** |
| The maximum number of CORESETs per group. |
| ***maxNrofControlResourceSetGroups*** |
| The maximum number of CORESET groups configured for one UE. |

In Figure 2, two TRPs and two CORESET groups are illustrated. Alternatively, three or more TRPs and the same number of CORESET groups may be configured. According to the second embodiment, each CORESET group is associated with a scrambling ID. Therefore, each TRP is associated with a scrambling ID. PDSCHs scheduled by DCIs transmitted from CORESETs contained in a CORESET group are scrambled by the sequence initialized by the scrambling ID associated with the CORESET group, i.e. with the TRP for the CORESET group.

The scrambled PDSCHs are transmitted to the UE. The UE descrambled the received PDSCHs with the same sequence for scrambling the PDSCHs. In particular, the PDSCHs received from TRP #0 are descrambled with the sequence initialized by *dataScramblingldentityPDSCHO* (which is associated with CORESET group #0). The PDSCHs received from TRP #1 are descrambled with the sequence initialized by *dataScramblingIdentityPDSCH1* (which is associated with CORESET group #1).

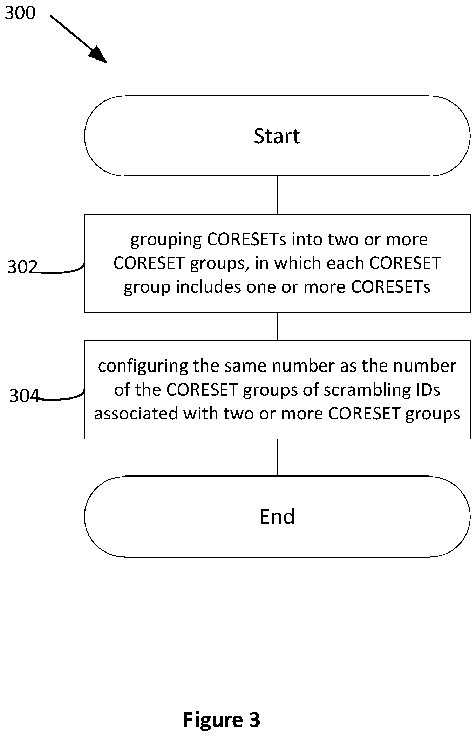

Figure 3 is a schematic flow chart diagram illustrating an embodiment of a method 300 for configuring multiple scrambling IDs. In some embodiments, the method 300 is performed by an apparatus, such as a base unit. In certain embodiments, the method 300 may be performed by a processor executing program code, for example, a microcontroller, a microprocessor, a CPU, a GPU, an auxiliary processing unit, a FPGA, or the like.

The method 300 may include 302 grouping CORESETs into two or more CORESET groups, in which each CORESET group includes one or more CORESETs; and 304 configuring the same number as the number of the CORESET groups of scrambling IDs associated with two or more CORESET groups. The method 300 may further include step of scrambling PDSCH(s) scheduled by DCI(s) transmitted in the CORESETs in a CORESET group with a scrambling sequence initialized with the scrambling ID associated with the CORESET group, and step of transmitting the scrambled PDSCH(s).

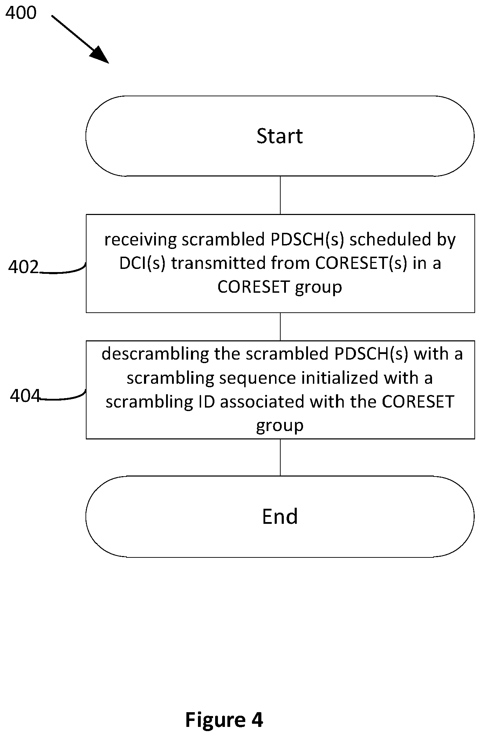

Figure 4 is a schematic flow chart diagram illustrating an embodiment of a method 400 for configuring multiple scrambling IDs. In some embodiments, the method 400 is performed by an apparatus, such as a remote unit (UE). In certain embodiments, the method 400 may be performed by a processor executing program code, for example, a microcontroller, a microprocessor, a CPU, a GPU, an auxiliary processing unit, a FPGA, or the like.

The method 400 may include 402 receiving scrambled PDSCH(s) scheduled by DCI(s) transmitted from CORESET(s) in a CORESET group; and 404 descrambling the scrambled PDSCH(s) with a scrambling sequence initialized with a scrambling ID associated with the CORESET group.

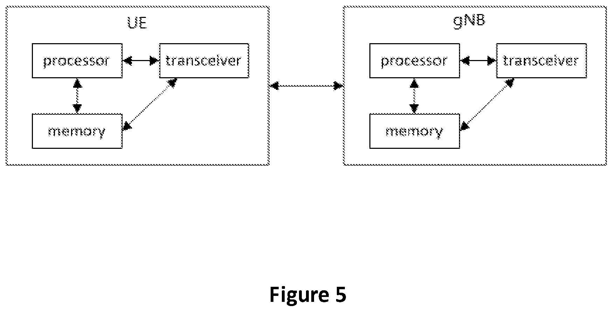

Figure 5 is a schematic block diagram illustrating apparatuses according to one embodiment.

Referring to Figure 5, the UE (i.e. the remote unit) includes a processor, a memory, and a transceiver. The processor implements a function, a process, and/or a method which are proposed in Figure 4. The gNB (i.e. base unit) includes a processor, a memory, and a transceiver. The processors implement a function, a process, and/or a method which are proposed in Figure 3. Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment. It is apparent that the claims that are not expressly cited in the claims are combined to form an embodiment or be included in a new claim.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Although the invention has been explained in relation to its preferred embodiment(s) as mentioned above, it is to be understood that many other possible modifications and variations can be made without departing from the scope of the present invention, which is defined by the claims.

## Claims

1. A method (300) comprising:
grouping (302) CORESETs into two or more CORESET groups, each CORESET group includes one or more CORESETs; and
configuring (304) the same number as the number of the CORESET groups of scrambling IDs associated with two or more CORESET groups,
wherein the CORESET(s) having the same index value are grouped into the same CORESET group.

2. The method (300) of claim 1, wherein the CORESET(s) transmitted from the same TRP are grouped into the same CORESET group.

3. The method (300) of claim 1, further comprising:
scrambling PDSCH(s) scheduled by DCI(s) transmitted in the CORESETs in a CORESET group with a scrambling sequence initialized with the scrambling ID associated with the CORESET group.

4. The method (300) of claim 3, further comprising:
transmitting the scrambled PDSCH(s).

5. A method (400) comprising:
receiving (402) scrambled PDSCH(s) scheduled by DCI(s) transmitted from CORESET(s) in a CORESET group; and
descrambling (404) the scrambled PDSCH(s) with a scrambling sequence initialized with a scrambling ID associated with the CORESET group,
wherein the CORESET(s) in the CORESET group have a same index value.

6. The method (400) of claim 5, wherein the CORESET(s) in the CORESET group are associated with a same TRP.

7. A base unit, comprising a processor that:
groups CORESETs into two or more CORESET groups, wherein each CORESET group includes one or more CORESETs; and
configures the same number as the number of the CORESET groups of scrambling IDs associated with two or more CORESET groups,
wherein the CORESET(s) having the same index value are grouped into the same CORESET group.

8. The base unit of claim 7, wherein the CORESET(s) transmitted from the same TRP are grouped into the same CORESET group.

9. The base unit of claim 7, wherein the processor further scrambles PDSCH(s) scheduled by DCI(s) transmitted in the CORESETs in a CORESET group with a scrambling sequence initialized with the scrambling ID associated with the CORESET group.

10. The base unit of claim 9, further comprising a transmitter that transmits the scrambled PDSCH(s).

11. A remote unit, comprising:
a receiver that receives scrambled PDSCH(s) scheduled by DCI(s) transmitted from CORESET(s) in a CORESET group; and
a processor that descrambles the scrambled PDSCH(s) with a scrambling sequence initialized with a scrambling ID associated with the CORESET group,
wherein the CORESET(s) in the CORESET group have a same index value.

12. The remote unit of claim 11, wherein the CORESET(s) in the CORESET group are associated with a same TRP.

## Patentansprüche

1. Verfahren (300), umfassend:
Gruppieren (302) von CORESETs in zwei oder mehr CORESET-Gruppen, wobei jede CORESET-Gruppe einen oder mehrere CORESETs einschließt; und
Konfigurieren (304) derselben Anzahl wie die Anzahl der CORESET-Gruppen von Scrambling-IDs, die mit zwei oder mehr CORESET-Gruppen verknüpft sind,
wobei der/die CORESET(s), der/die denselben Indexwert aufweisen, in dieselbe CORESET-Gruppe gruppiert werden.

2. Verfahren (300) nach Anspruch 1, wobei der/die CORESET(s), der/die von demselben TRP übertragen werden, in dieselbe CORESET-Gruppe gruppiert werden.

3. Verfahren (300) nach Anspruch 1, ferner umfassend:
Scrambling von PDSCH(s), der/die durch DCI(s) geplant ist/sind, der/die in den CORESETs in einer CORESET-Gruppe übertragen wird/werden, mit einer Scrambling-Sequenz, die mit der Scrambling-ID initialisiert wird, die mit der CORESET-Gruppe verknüpft ist.

4. Verfahren (300) nach Anspruch 3, ferner umfassend:
Übertragen der/des verscrambelten PDSCH(s).

5. Verfahren (400), umfassend:
Empfangen (402) von verscrambeltem/en PDSCH(s), der/die durch DCI(s) geplant ist/sind, der/die von CORESET(s) in einer CORESET-Gruppe übertragen wird/werden; und
Entscrambeln (404) des/der verscrambelten PDSCH(s) mit einer Scrambling-Sequenz, die mit einer Scrambling-ID initialisiert wird, die mit der CORESET-Gruppe verknüpft ist,
wobei der/die CORESET(s) in der CORESET-Gruppe denselben Indexwert aufweisen.

6. Verfahren (400) nach Anspruch 5, wobei der/die CORESET(s) in der CORESET-Gruppe mit einem selben TRP verknüpft sind.

7. Basiseinheit, umfassend einen Prozessor, der:
CORESETs in zwei oder mehr CORESET-Gruppen gruppiert, wobei jede CORESET-Gruppe einen oder mehrere CORESETs einschließt; und
dieselbe Anzahl wie die Anzahl der CORESET-Gruppen von Scrambling-IDs konfiguriert, die mit zwei oder mehr CORESET-Gruppen verknüpft sind,
wobei der/die CORESET(s), der/die denselben Indexwert aufweisen, in dieselbe CORESET-Gruppe gruppiert werden.

8. Basiseinheit nach Anspruch 7, wobei der/die CORESET(s), der/die von demselben TRP übertragen wird/ werden, in dieselbe CORESET-Gruppe gruppiert werden.

9. Basiseinheit nach Anspruch 7, wobei der Prozessor ferner PDSCH(s) verscrambelt, der/die durch DCI(s) geplant ist/sind, der/die in den CORESETs in einer CORESET-Gruppe übertragen wird/werden, mit einer Scrambling-Sequenz, die mit der Scrambling-ID initialisiert wird, die mit der CORESET-Gruppe verknüpft ist.

10. Basiseinheit nach Anspruch 9, ferner umfassend einen Sender, der den/die verscrambelten PDSCH(s) überträgt.

11. Entfernte Einheit, umfassend:
einen Empfänger, der verscrambelte/en PDSCH(s) empfängt, der/die durch DCI(s) geplant ist/sind, der/die von CORESET(s) in einer CORESET-Gruppe übertragen wird/werden; und
einen Prozessor, der den/die verscrambelten PDSCH(s) entscrambelt, mit einer Scrambling-Sequenz, die mit einer Scrambling-ID initialisiert wird, die mit der CORESET-Gruppe verknüpft ist,
wobei der/die CORESET(s) in der CORESET-Gruppe denselben Indexwert aufweisen.

12. Entfernte Einheit nach Anspruch 11, wobei der/die CORESET(s) in der CORESET-Gruppe mit einem selben TRP verknüpft sind.

## Revendications

1. Procédé (300) comprenant :
le groupement (302) de CORESET dans deux groupes de CORESET ou plus, chaque groupe de CORESET comporte un ou plusieurs CORESET ; et
la configuration (304) du même nombre que le nombre des groupes de CORESET d'ID de brouillage associés à deux groupes de CORESET ou plus,
dans lequel le(s) CORESET ayant la même valeur d'indice sont groupés dans le même groupe de CORESET.

2. Procédé (300) selon la revendication 1, dans lequel le(s) CORESET transmis à partir du même TRP sont groupés dans le même groupe de CORESET.

3. Procédé (300) selon la revendication 1, comprenant en outre :
le brouillage d'un ou plusieurs PDSCH planifié(s) par une ou des DCI transmise(s) dans les CORESET dans un groupe de CORESET avec une séquence de brouillage initialisée avec l'ID de brouillage associé au groupe de CORESET.

4. Procédé (300) selon la revendication 3, comprenant en outre :
la transmission du ou des PDSCH brouillé(s).

5. Procédé (400) comprenant :
la réception (402) de PDSCH brouillé(s) planifié(s) par une ou des DCI transmise(s) à partir d'un ou plusieurs CORESET dans un groupe de CORESET ; et
le désembrouillage (404) du ou des PDSCH brouillé(s) avec une séquence de brouillage initialisée avec un ID de brouillage associé au groupe de CORESET,
dans lequel le(s) CORESET dans le groupe de CORESET ont une même valeur d'indice.

6. Procédé (400) selon la revendication 5, dans lequel le(s) CORESET dans le groupe de CORESET sont associés à un même TRP.

7. Unité de base, comprenant un processeur qui :
groupe des CORESET dans deux groupes de CORESET ou plus, dans lequel chaque groupe de CORESET comporte un ou plusieurs CORESET ; et
configure le même nombre que le nombre des groupes de CORESET d'ID de brouillage associés à deux groupes de CORESET ou plus,
dans lequel le(s) CORESET ayant la même valeur d'indice sont groupés dans le même groupe de CORESET.

8. Unité de base selon la revendication 7, dans laquelle le(s) CORESET transmis à partir du même TRP sont groupés dans le même groupe de CORESET.

9. Unité de base selon la revendication 7, dans laquelle le processeur brouille en outre un ou des PDSCH planifié(s) par une ou des DCI transmise(s) dans les CORESET dans un groupe de CORESET avec une séquence de brouillage initialisée avec l'ID de brouillage associé au groupe de CORESET.

10. Unité de base selon la revendication 9, comprenant en outre un transmetteur qui transmet le(s) PDSCH brouillé(s).

11. Unité distante, comprenant :
un récepteur qui reçoit un ou des PDSCH brouillé(s) planifié(s) par une ou des DCI transmise(s) à partir d'un ou plusieurs CORESET dans un groupe de CORESET ; et
un processeur qui désembrouille le(s) PDSCH brouillé(s) avec une séquence de brouillage initialisée avec un ID de brouillage associé au groupe de CORESET,
dans laquelle le(s) CORESET dans le groupe de CORESET ont une même valeur d'indice.

12. Unité distante selon la revendication 11, dans laquelle le(s) CORESET dans le groupe de CORESET sont associés à un même TRP.
